# EUROPÄISCHE PATENTANMELDUNG

(11) **EP 1 983 642 A1**
(43) Veröffentlichungstag der Anmeldung: **22.10.2008**
(21) Anmeldenummer: 07007993.4
(22) Anmeldetag: 19.04.2007
(51) Int. Cl.: H02P 1/16, H02P 1/26, H04B 10/10

(54) **Bedieneinheit für einen Motorstarter**

(71) Anmelder: SIEMENS AKTIENGESELLSCHAFT, 80333 München (DE)
(72) Erfinder: Meinke, Martin, 92224 Amberg (DE); Walde, David, 02699 Neschwitz (DE)

(57) **Zusammenfassung**

Die Erfindung betrifft eine Bedieneinheit (3) zur manuellen Eingabe von Steuerbefehlen für einen Motorstarter (2) und/oder zum Abrufen bzw. Darstellen von Diagnoseinformationen. Um die manuelle Eingabe von Steuerbefehlen während einer Hand-vor-Ort-Betriebsart für einen Motorstarter (3) mit Hilfe einer Bedieneinheit (2) zu vereinfachen, wird vorgeschlagen, eine Schlüsselinformation (S) kontaktlos von der Bedieneinheit (3) an den Motorstarter (2) zu übertragen.

## Beschreibung

Die Erfindung betrifft eine Bedieneinheit zur manuellen Eingabe von Steuerbefehlen für einen Motorstarter und/oder zum Abrufen bzw. Darstellen von Diagnoseinformationen. Darüber hinaus betrifft die Erfindung einen Motorstarter mit einer Kommunikationsschnittstelle zur Kommunikation mit einer Bedieneinheit zur manuellen Eingabe von Steuerbefehlen und/oder zum Abrufen bzw. Darstellen von Diagnoseinformationen. Die Erfindung betrifft darüber hinaus ein System mit einem Motorstarter und einer Bedieneinheit. Schließlich betrifft die Erfindung auch ein Verfahren zur manuellen Eingabe von Steuerbefehlen für einen Motorstarter und/oder zum Abrufen bzw. Darstellen von Diagnoseinformationen mit Hilfe einer Bedieneinheit.

Motorstarter dienen zum Schalten und Schützen bzw. zum Ansteuern von Verbrauchern, insbesondere Motoren. Sie bestehen zumeist aus einem Motorschutzschalter bzw. Leistungsschalter sowie einem Schütz, gegebenenfalls noch ergänzt durch einen Kurzschlussstrombegrenzer und/oder ein Überstromrelais.

Insbesondere bei Motorstartern, die zur Datenkommunikation an ein Bus-System anschließbar sind, ist neben einer Betriebsart "Automatik" auch eine Betriebsart "Hand-Vor-Ort" vorgesehen. Im Handbetrieb werden die Motorstarter durch den Anwender vor Ort bedient. Dabei ist es wichtig, dass nur autorisiertes Personal diese Bedienung vornehmen kann. Die Autorisierung wird in der Regel mit Hilfe eines "Schlüssels" nachgewiesen. Hierzu ist aus dem Stand der Technik die Verwendung von Schlüsselschaltern bekannt. Nachteilig bei dem Einsatz von Schlüsselschaltern ist es zum einen, dass das erforderliche Schloss eine vergleichbar große Einbautiefe in dem Motorstarter benötigt. Schlüsselschalter sind zudem vergleichsweise teuer. Darüber hinaus sind neben dem Schlüsselschalter stets auch separate Bedienschalter erforderlich, was sowohl den Platzbedarf, als auch die Kosten weiter erhöht. Schließlich führt die Verwendung eines Schlüsselschalters auch dazu, dass in dem Motorstarter Öffnungen vorgesehen sein müssen, die zum Erreichen höherer Schutzarten (beispielsweise IP 65) sehr aufwendig abgedichtet werden müssen, was die Gesamtkosten des Motorstarters ebenfalls erhöht.

Eine Aufgabe der vorliegenden Erfindung ist es, die manuelle Eingabe von Steuerbefehlen für einen Motorstarter und/oder zum Abrufen bzw. Darstellen von Diagnoseinformationen während einer Hand-vor-Ort-Betriebsart mit Hilfe einer Bedieneinheit zu vereinfachen.

Die Aufgabe wird durch eine Bedieneinheit nach Anspruch 1, einen Motorstarter nach Anspruch 5, ein System nach Anspruch 9 bzw. ein Verfahren nach Anspruch 10 gelöst.

Eine erfindungsgemäße Bedieneinheit zur manuellen Eingabe von Steuerbefehlen für einen Motorstarter und/oder zum Abrufen bzw. Darstellen von Diagnoseinformationen ist gekennzeichnet durch eine Kommunikationsschnittstelle zur drahtlosen Übertragung von Daten zwischen der Bedieneinheit und dem Motorstarter. Bei der Bedieneinheit handelt es sich vorzugsweise um ein mobiles, tragbares Gerät, wobei grundsätzlich vorgesehen sein kann, dass mit einer Bedieneinheit mehrere Motorstarter bedienbar sind.

Ein erfindungsgemäßer Motorstarter mit einer Kommunikationsschnittstelle zur Kommunikation mit einer Bedieneinheit zur manuellen Eingabe von Steuerbefehlen und/oder zum Abrufen bzw. Darstellen von Diagnoseinformationen ist dadurch gekennzeichnet, dass die Kommunikationsschnittstelle zur drahtlosen Übertragung von Daten zwischen der Bedieneinheit und dem Motorstarter ausgebildet ist. Der Motorstarter ist derart ausgeführt, dass er mit der Bedieneinheit zusammenarbeiten kann. Ergänzungen oder Änderungen im Aufbau des Motorstarters können nachgerüstet werden, so dass auch herkömmliche Motorstarter zur Verwendung mit der neuartigen Bedieneinheit umgerüstet werden können.

Ein erfindungsgemäßes System ist dadurch gekennzeichnet, dass es einen solchen Motorstarter und eine solche Bedieneinheit umfasst.

Ein erfindungsgemäßes Verfahren zur manuellen Eingabe von Steuerbefehlen für einen Motorstarter und/oder zum Abrufen bzw. Darstellen von Diagnoseinformationen mit Hilfe einer Bedieneinheit ist durch die folgenden Schritte gekennzeichnet: Gewährleisten einer Energieversorgung der Bedieneinheit, Kontaktloses Übertragen einer Schlüsselinformation von der Bedieneinheit an den Motorstarter, Prüfen der Schlüsselinformation durch den Motorstarter, Freigabe einer Hand-Vor-Ort-Betriebsart durch den Motorstarter.

Eine Grundidee der Erfindung ist es, anstelle des bisher verwendeten Schlüsselschalters, bei dem eine elektrische Steckverbindung zwischen dem Motorstarter und der Bedieneinheit erforderlich ist, werden die zur Autorisierung des Anwenders erforderlichen Schlüsselinformationen drahtlos von der Bedieneinheit zu dem Motorstarter übertragen. Dort werden diese überprüft, bevor die Hand-Vor-Ort-Betriebsart freigegeben wird. Zu diesem Zweck sind Bedieneinheit und Motorstarter für eine drahtlose Kommunikation zur Übertragung von Daten ausgebildet. Unter einer "Übertragung von Daten zwischen der Bedieneinheit und dem Motorstarter" wird dabei sowohl die Datenübertragung von der Bedieneinheit zu dem Motorstarter, als auch die Datenübertragung von dem Motorstarter zur der Bedieneinheit verstanden.

Durch die erfindungsgemäße Autorisierung entfällt die Notwendigkeit einer elektrischen Steckverbindung. Weder müssen kostenintensive Schlüsselschalter bereitgehalten werden, noch ist es erforderlich, im Motorstarter umfangreiche Räume für das erforderliche Schloss vorzusehen. Da die Bedienschalter in der Bedieneinheit integriert sind, entfällt auch die Notwendigkeit separater Bedienschalter am Motorstarter. Somit entfallen auch sämtliche mit der elektrischen Steckverbindung und den Motorstarter eigenen Bedienschaltern verbundene Fehlerquellen, wie beispielsweise Fehlkontakte aufgrund mechanischer Beschädigungen der Steckkontakte. Schließlich ist auch das Erreichen höherer Schutzarten, wie beispielsweise IP 65, deutlich einfacher und kostengünstiger möglich, da aufwendige Abdichtungen entfallen.

Vorteilhafte Ausführungsformen der Erfindung sind in den Unteransprüchen angeben.

In einer vorteilhaften Ausführungsform der Erfindung ist sowohl die Kommunikationsschnittstelle des Motorstarters, als auch die Kommunikationsschnittstelle der Bedieneinheit zur kontaktlosen Datenübertragung unter Verwendung eines Hochfrequenzfeldes (HF-Kopplung) oder unter Verwendung eines RFID-Verfahrens ausgebildet. Alternativ hierzu können andere drahtlose Kommunikationsverfahren eingesetzt werden, beispielsweise Methoden der optischen Datenübertragung, z.B. unter Verwendung von Infrarot-Sendern bzw. -Empfängern.

Erfolgt die kontaktlosen Datenübertragung unter Verwendung einer HF-Kopplung, kommt vorteilhafterweise entweder eine Frequenz- oder eine Amplitudenmodulation zur Anwendung.

Bei einer Datenübertragung unter Verwendung eines RFID-Verfahrens werden vorzugsweise Systemkomponenten verwendet, die sich auf einem Mikrochip integrieren lassen. Die Bedieneinheit umfasst dann wenigstens einen RFID-Transponder, in dessen Speicher die Schlüsselinformation abgelegt ist. Der Motorstarter andererseits umfasst ein RFID-Lesegerät. Das Lesegerät erzeugt ein hochfrequentes elektromagnetisches Wechselfeld, dass von der Antenne des Transponders empfangen wird. Durch den dadurch induzierten Strom wird der Mikrochip im Transponder aktiviert und die Schlüsselinformation an das Lesegerät übertragen. Der aktivierte Mikrochip im Transponder ist gleichzeitig in der Lage, Signale, die das Lesegerät in sein magnetisches Feld moduliert, zu empfangen.

Gemäß einer weiteren vorteilhaften Ausführungsform der Erfindung ist die Bedieneinheit mit einer Energieversorgungseinrichtung ausgestattet, die zum kontaktlosen Empfang von Energie, vorzugsweise unter Verwendung eines Hochfrequenzfeldes, ausgebildet ist. Bei dem Hochfrequenzfeld handelt es sich vorzugsweise um das gleiche Hochfrequenzfeld, das auch zur Datenübertragung verwendet wird.

Erfolgt die Energieversorgung der Bedieneinheit über den Motorstarter, dann weist dieser eine entsprechende Energieversorgungseinrichtung zur kontaktlosen Energieversorgung der Bedieneinheit auf. Ist keine Energieversorgung über den Motorstarter vorgesehen, kann die Bedieneinheit alternativ auch mit einer eigenen Energiequelle, beispielsweise einer Batterie oder dergleichen, ausgerüstet sein.

In ein weiteren vorteilhaften Ausführungsform der Erfindung weist die Bedieneinheit eine Vorrichtung zur Herstellung einer mechanischen Verbindung mit dem Motorstarter auf. Entsprechend umfasst in diesem Fall auch der Motorstarter eine passende Verbindungsvorrichtung. Bei der Verbindung kann es sich beispielsweise um eine Rast- oder Schnappverbindung handeln. Alternativ hierzu ist auch eine Verbindung unter Verwendung wenigstens eines Permanent- oder Elektromagneten möglich. Trotz dem eine mechanische Verbindung zwischen der Bedieneinheit und dem Motorstarter für den Betrieb nicht mehr zwingend notwendig ist, so kann sie dennoch von Vorteil sein, um eine exakte Zuordnung einer Bedieneinheit zu einem bestimmten Motorstarter festzulegen, bzw. um einen definierten (Mindest-) Abstand zwischen der Bedieneinheit und dem Motorstarter zu gewährleisten. Letzteres ist besonders dann sinnvoll, wenn die Reichweite der kontaktlosen Energieübertragung bzw. der kontaktlosen Datenübertragung begrenzt ist und Fehlfunktionen der Bedieneinheit bzw. des Motorstarters sicher ausgeschlossen werden sollen. Eine mechanische Verbindung zwischen der Bedieneinheit und dem Motorstarter dient mit anderen Worten vor allem auch dazu sicherzustellen, dass zum Zeitpunkt der Datenübertragung die Kommunikation nur zwischen genau zwei definierten Teilnehmern möglich ist. Somit kann eine versehentliche Bedienung eines weiteren Motorstarters vermieden werden.

Gemäß einer weiteren bevorzugten Ausführungsform der Erfindung kann mit Hilfe der zum Zweck der Autorisierung zu übertragenden Schlüsselinformation die Auswahl der möglichen Kommunikationspartner eingeschränkt werden. So ist es beispielsweise möglich, durch eine entsprechende Anpassung des Autorisierungsprozesses sicherzustellen, dass mit einer bestimmten Bedieneinheit ausschließlich Motorstarter eines bestimmten Typs bedient werden können. Andererseits ist es ebenfalls möglich, dass durch einen Datenaustausch während des Autorisierungsvorgangs der Bedieneinheit von dem Motorstarter erst Informationen über den Gerätetyp übermittelt werden, anhand dieser Informationen dann die Bedieneinheit eine entsprechend auf den Typ des Motorstarters abgestimmte Bedienfunktionalität bereitstellt. Darüber hinaus kann durch eine entsprechende Anpassung der von der Bedieneinheit an den Motorstarter zu übertragenden Schlüsselinformation die Funktionsvielfalt der Bedieneinheit festgelegt werden. So ist es beispielsweise möglich, dass es Bedieneinheiten gibt, die ausschließlich für Test- bzw. Wartungszwecke autorisiert sind, während andere Bedieneinheiten auch zum Konfigurieren des Motorstarters verwendet werden können. Entsprechend der im einzelnen Anwendungsfall freigegebenen Funktionalität der Bedieneinheit können dabei die entsprechenden graphischen Bediensymbole auf dem Display oder dergleichen der Bedieneinheit ein- bzw. ausgeblendet werden. Ist es vorgesehen, für verschiedene Benutzer der Bedieneinheit verschiedene Bedienfunktionalitäten zu erlauben, so kann die dann zu übertragende Schlüsselinformation vorab an den Benutzer und den ihm individuell zugewiesenen Autorisierungsgrad angepasst werden, wenn der Benutzer vor der Autorisierung dazu aufgefordert wird, sich selbst an dem Bedienteil "anzumelden".

Die Bedieneinheit ist vorzugsweise als ein Terminal ausgeführt, also als ein Ein- und Ausgabegerät, über das ein Bediener interaktiv mit einem Motorstarter kommunizieren kann. Die Bedieneinheit umfasst hierzu mindestens ein Anzeigemedium und ein Eingabemedium. Bei dem Anzeigemedium kann es sich beispielsweise um einen Bildschirm, eine LCD-Anzeige oder eine andere Art von Anzeige handeln; beispielsweise können auch eine Anzahl von Leuchtdioden (LED) als Anzeige verwendet werden. Das Eingabemedium weist vorzugsweise eine Tastatur, mindestens jedoch eine Anzahl von Bedienungstasten auf. Besonders vorteilhaft ist die Verwendung einer Kombination dieser beiden Medien in Form eines berührungssensitiven Bildschirms (touch screen).

Die vorliegende Erfindung kann nicht nur mit Motorstartern verwendet werden. Auch eine Verwendung mit Frequenzumrichtern oder anderen Geräten ist möglich.

Die Erfindung wird nachfolgend anhand von Ausführungsbeispielen beschrieben, die mit Hilfe von Zeichnungen näher erläutert werden. Hierbei zeigen in vereinfachten, schematischen Darstellungen:
- FIG 1: ein System mit Motorstarter und Bedieneinheit gemäß der vorliegenden Erfindung,
- FIG 2: eine Detailansicht der Energieversorgung und der Datenübertragung zwischen Motorstarter und Bedieneinheit unter Verwendung eines RFID-Verfahrens,
- FIG 3: eine Detailansicht der Energieversorgung und der Datenübertragung zwischen Motorstarter und Bedieneinheit unter Verwendung einer HF-Kopplung.

Ein erfindungsgemäßes System 1 umfasst einen Motorstarter 2 und eine tragbare Bedieneinheit 3 zur manuellen Eingabe von Steuerbefehlen für den Motorstarter 2, d.h. zur Bedienung des Motorstarters 2 in einer Hand-vor-Ort-Betriebsart. Sowohl Motorstarter 2, als auch Bedieneinheit 3 erfüllen die Schutzart IP65. Sie weisen keine relevanten Gehäuseöffnungen oder dergleichen auf.

Die Bedieneinheit 3 umfasst eine Kommunikationsschnittstelle 4 zur drahtlosen Übertragung von Daten zwischen der Bedieneinheit 3 und dem Motorstarter 2. Die Bedieneinheit 3 ist als Terminal ausgeführt und umfasst ein Anzeige-/Eingabemedium 5. Das Anzeige-/Eingabemedium 5 ersetzt dabei die herkömmlichen, mechanischen Bedienschalter.

Der Motorstarter 2 umfasst ebenfalls eine Kommunikationsschnittstelle 6 zur drahtlosen Übertragung, die für ein Zusammenwirken mit der Kommunikationsschnittstelle 4 der Bedieneinheit 3 ausgebildet ist.

Bedieneinheit 3 und Motorstarter 2 weisen an ihren Gehäusen einander entsprechende Vorrichtungen 7, 8 zur Herstellung einer lösbaren Rastverbindung auf. Die Bedieneinheit 3 wird vor der Autorisierung mit dem Motorstarter 2 verrastet und kann nach der Bedienung wieder von dem Motorstarter 2 gelöst und entfernt werden.

Zur manuellen Eingabe von Steuerbefehlen für den Motorstarter 2 mit Hilfe der Bedieneinheit 3 wird zunächst die Energieversorgung der Bedieneinheit 3 gewährleistet. Anschließend erfolgt ein kontaktloses Übertragen einer Schlüsselinformation S von der Bedieneinheit 3 an den Motorstarter 2. Einzelheiten zur Energieversorgung und der Datenübertragung werden weiter unten im Detail beschrieben.

Nach dem Übertragen der Schlüsselinformation S von der Bedieneinheit 3 an den Motorstarter 2 erfolgt ein Prüfen der Schlüsselinformation S durch ein entsprechendes Prüfmodul 9 des Motorstarter 2. Dabei handelt es sich vorzugsweise um einen Mikroprozessor mit einer angepassten Betriebssoftware zur Überprüfung und Autorisierung eines Benutzers anhand einer Schlüsselinformation S. Anschließend erfolgt durch das Prüfmodul 9 entweder eine Freigabe der Hand-Vor-Ort-Betriebsart oder eine Ablehnung des Autorisierungsgesuches. Bei einer Freigabe wird ein Zugriff auf die eigentlichen Funktionseinheiten 10 des Motorstarters, wie Schütze etc., freigegeben. Der Umfang der Freigabe wird dabei anhand des Inhalts der übertragenen Schlüsselinformation S durch das Prüfmodul 9 bestimmt. So sind mit einer ersten Bedieneinheit beispielsweise nur einfache Tests eines Motorstarters durchführbar, während mit einer weiteren Bedieneinheit sämtliche Funktionen des Motorstarters freigeschaltet sind.

Das Bedienelement 3 weist ein Kontrollmodul 11 auf. Dieses dient dazu, nach einer Anmeldung eines Benutzers an dem Bedienelement 3 eine individuell an den Benutzer angepasste Schlüsselinformation S zu erzeugen bzw. auszuwählen, die dann während der Autorisierung an den Motorstarter 2 übertragen wird. Das Kontrollmodul 11 kann zu diesem Zweck eine Mikroprozessor umfassen, der zur Anpassung der Schlüsselinformation S eine entsprechende Betriebssoftware verwendet. Das Kontrollmodul 11 kann aber auch ohne diese Auswahlfunktionalität ausgeführt werden; beispielsweise derart, dass eine feste Schlüsselinformation S hinterlegt ist.

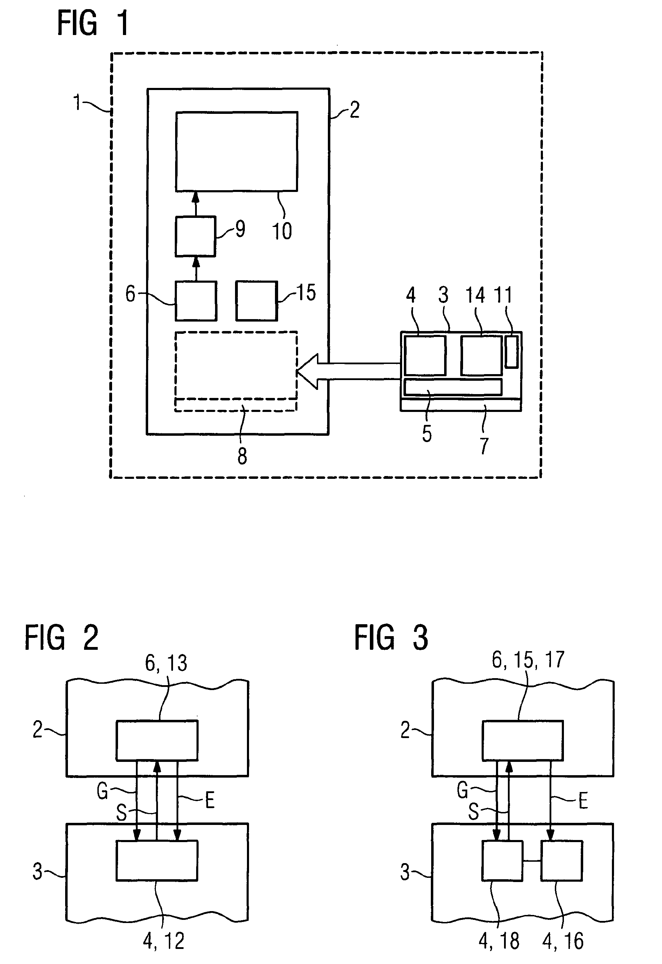

In FIG 2 ist eine Ausführungsform der Erfindung abgebildet, bei der die Kommunikationsschnittstelle 6 des Motorstarters 2 und die Kommunikationsschnittstelle 4 der Bedieneinheit 3 zur kontaktlosen Datenübertragung unter Verwendung eines RFID-Verfahrens ausgebildet sind. Die Kommunikationsschnittstelle 4 der Bedieneinheit 3 umfasst dabei einen RFID-Transponder 12, in dessen Speicher die Schlüsselinformation S abgelegt ist. Die Kommunikationsschnittstelle 6 des Motorstarter 2 andererseits umfasst ein RFID-Lesegerät 13. Das Lesegerät 13 erzeugt ein hochfrequentes elektromagnetisches Wechselfeld E, dass von einer Antenne des Transponders 12 empfangen wird. Durch den dadurch induzierten Strom wird der Mikrochip im Transponder 12 aktiviert und die Schlüsselinformation S an das Lesegerät 13 übertragen. Der aktivierte Mikrochip im Transponder 12 ist gleichzeitig in der Lage, Signale, die das Lesegerät 13 in sein magnetisches Feld moduliert, zu empfangen. Dabei handelt es sich beispielsweise um Signale G, mit denen Gerätezustandsinformationen des Motorstarters 2 übertragen werden.

In FIG 3 ist eine Ausführungsform der Erfindung abgebildet, bei der die Bedieneinheit 3 eine Energieversorgungseinrichtung 14 aufweist, die zum kontaktlosen Empfang von Energie unter Verwendung eines von einer entsprechenden Energieversorgungseinrichtung 15 des Motorstarters 2 zur Verfügung gestellten Hochfrequenzfeldes ausgebildet ist. Die Energieversorgungseinrichtungen 14, 15 von Motorstarter 2 und Bedieneinheit 3 weisen zu diesem Zweck geeignete HF-Koppelelemente 16, 17 auf, bspw. elektromagnetische Spulen. Das zur Energieversorgung der Bedieneinheit 3 genutzte Hochfrequenzfeld E wird zugleich zur Datenübertragung, d.h. zur Übertragung der Geräteinformationen G von dem Motorstarter 2 an die Bedieneinheit 3 verwendet. Mit anderen Worten dient die Energieversorgungseinrichtung 15 des Motorstarters 2 zugleich als Kommunikationsschnittstelle. Bei der Datenübertragung über das Hochfrequenzfeld kommt eine Amplitudenmodulation zur Anwendung. Die Übertragung der Schlüsselinformation S von der Bedieneinheit 3 an den Motorstarter 2 erfolgt ebenfalls über HF-Kopplung, wobei die Energie zum Betrieb des in der Bedieneinheit 3 dafür vorgesehenen HF-Senders 18 von der Energieversorgungseinheit 14 der Bedieneinheit 3 stammt.

## Patentansprüche

1. Bedieneinheit (3) zur manuellen Eingabe von Steuerbefehlen für einen Motorstarter (2) und/oder zum Abrufen bzw. Darstellen von Diagnoseinformationen, **gekennzeichnet durch** eine Kommunikationsschnittstelle (4) zur drahtlosen Übertragung von Daten zwischen der Bedieneinheit (3) und dem Motorstarter (2).

2. Bedieneinheit (3) nach Anspruch 1, **dadurch gekennzeichnet, dass** die Kommunikationsschnittstelle (4) zur kontaktlosen Datenüberübertrag unter Verwendung eines Hochfrequenzfeldes oder unter Verwendung eines RFID-Verfahrens ausgebildet ist.

3. Bedieneinheit (3) nach Anspruch 1 oder 2, mit einer Energieversorgungseinrichtung (14), die zum kontaktlosen Empfang von Energie, vorzugsweise unter Verwendung eines elektromagnetischen Feldes, ausgebildet ist.

4. Bedieneinheit (3) nach einem der Ansprüche 1 bis 3, mit einer Vorrichtung (7) zur Herstellung einer mechanischen Verbindung mit dem Motorstarter (2).

5. Motorstarter (2) mit einer Kommunikationsschnittstelle (6) zur Kommunikation mit einer Bedieneinheit (3) zur manuellen Eingabe von Steuerbefehlen und/oder zum Abrufen bzw. Darstellen von Diagnoseinformationen, **dadurch gekennzeichnet, dass** die Kommunikationsschnittstelle (6) zur drahtlosen Übertragung von Daten zwischen der Bedieneinheit (3) und dem Motorstarter (2) ausgebildet ist.

6. Motorstarter (2) nach Anspruch 5, **dadurch gekennzeichnet, dass** die Kommunikationsschnittstelle (6) zur kontaktlosen Datenübertragung unter Verwendung eines Hochfrequenzfeldes oder unter Verwendung eines RFID-Verfahrens ausgebildet ist.

7. Motorstarter (2) nach Anspruch 5 oder 6, mit einer Energieversorgungseinrichtung (15), die zur kontaktlosen Energieversorgung der Bedieneinheit (3), vorzugsweise unter Verwendung eines elektromagnetischen Feldes ausgebildet ist.

8. Motorstarter (2) nach einem der Ansprüche 5 bis 7, mit einer Vorrichtung (8) zur Herstellung einer mechanischen Verbindung mit der Bedieneinheit (3).

9. System (1) mit einem Motorstarter (2) nach einem der Ansprüche 5 bis 8 und einer Bedieneinheit (3) nach einem der Ansprüche 1 bis 4.

10. Verfahren zur manuellen Eingabe von Steuerbefehlen für einen Motorstarter (3) und/oder zum Abrufen bzw. Darstellen von Diagnoseinformationen mit Hilfe einer Bedieneinheit (2), mit den Schritten
- Gewährleisten einer Energieversorgung der Bedieneinheit (3),
- Kontaktloses Übertragen einer Schlüsselinformation (S) von der Bedieneinheit (3) an den Motorstarter (2),
- Prüfen der Schlüsselinformation (S) durch den Motorstarter (3),
- Freigabe eines Hand-Vor-Ort-Betriebsart durch den Motorstarter (3).
